# EUROPÄISCHE PATENTANMELDUNG

(11) **EP 1 392 044 A1**
(43) Veröffentlichungstag der Anmeldung: **25.02.2004**
(21) Anmeldenummer: 03102314.6
(22) Anmeldetag: 28.07.2003
(51) Int. Cl.: H04M 3/56

(54) **Verfahren und Vorrichtung zum Bereitstellen von Konferenzen**

(30) Priorität: 21.08.2002 DE 10238285
(71) Anmelder: SIEMENS AKTIENGESELLSCHAFT, 80333 München (DE)
(72) Erfinder: Friedrich, Peter, 15370, Petershagen (DE); Löbig, Norbert, 64291, Darmstadt (DE)

(57) **Zusammenfassung**

Beim Stand der Technik werden Konferenzen in der Regel durch Ziffernfolgebedienung der Telephonie oder eine graphische, an ein höherwertiges, intelligentes Endgerät gebundene Bedienoberfläche gesteuert. Dies setzt der sporadischen sofortigen Bedienbarkeit zum Einleiten und Steuern der Konferenzen her Grenzen. Im Hinblick auf das Einleiten der Konferenzen sind sogar erhebliche, manuelle Interaktionen erforderlich. Die Erfindung schafft hier Abhilfe, indem eine Steuerschnittstelle zwischen einer Ansage-/ Dialog-Funktion mit Spracherkennungsfunktionalität und einer Konferenzmanagement-Funktion vorgesehen ist, über die die Konferenz eingeleitet und während ihres Ablaufes gesteuert werden kann. Die Konferenzmanagement-Funktion erhält hierbei in ihrem über die Ansage-/ Dialog-Funktion geführten Dialog mit dem Konferenzführer und den Konferenzteilnehmern die für die Konferenz relevanten Kenndaten, reserviert im voraus die entsprechenden Ressourcen und greift über eine weitere Schnittstelle direkt auf die Steuerfunktionen der Konferenz zu, die auch während der Konferenz im Dialog mit den Konferenzteilnehmern beeinflussbar sind.

## Beschreibung

Die Erfindung betrifft ein Verfahren und eine Vorrichtung gemäß den Oberbegriffen der Patentansprüche 1 und 15.

Dienste für Audio-Konferenzen gehören beim Stand der Technik zum unverzichtbaren Leistungsumfang von sprachvermittelnden Netzen. Sie werden von den Vermittlungsstellen des Netzes oder auch von vermittlungsstellenexternen Netzelementen realisiert. Hierbei basiert die Konferenzfunktion auf einer Mischfunktion für den Audiostrom der beteiligten Konferenzteilnehmer (Conferees), die von einer speziellen Hardware mit DSP-Kapazität (Digital Signal Prozessor) bereitgestellt wird.

Im klassischen Fall, wo der Nutzkanal einer Verbindung in die Vermittlungsstelle hineingeführt wird, können die Konferenzund hierzu benötigte Ansage- und Tonfunktionen von mit entsprechender Funktionalität ausgerüsteten peripheren Einrichtungen oder externen Einrichtungen bereitgestellt werden. Werden die Nutzdaten jedoch außerhalb der Vermittlungsstelle in einem Paketnetz geführt, so wird hierzu vorzugsweise mindestens ein externes Konferenzsystem genutzt. Dieses weist Schnittstellen zum Paketnetz für die Nutzdaten der Konferenz auf. Die Nutzdaten der Konferenz sind dabei entweder die Nutzdaten der einzelnen Konferenzteilnehmer oder die einzubringenden Ansagen/ Dialoge und Töne sowie das an die Konferenzteilnehmer zu verteilende, über mindestens eine Konferenzbrücke erzeugte Mischsignal. Zusätzlich kann das externe Konferenzsystem eine Steuerschnittstelle zu der für die Steuerung von außerhalb der Vermittlungsstelle geführten Verbindungen im Paketnetz tätigen Vermittlungsstelle aufweisen, um die gewünschten Grundfunktionen während der Konferenz zu steuern oder die Einstreuung von z. B im externen Konferenzsystem erzeugten Ansagen/ Dialogen und Tönen zu veranlassen.

Grundsätzlich weisen Konferenzdienste eine Mehrzahl von Konferenzleistungsmerkmalen auf, wobei Unterscheidung und Abgrenzung im Hinblick auf Initiierung und Steuerung des Verlaufs der Konferenz erfolgt:

So gibt es zum einen Konferenzleistungsmerkmale, mit denen man als Teilnehmer durch DIAL-IN (Einwahl des Konferenzteilnehmers in die Konferenz) oder durch DIAL-OUT (Anruf des Teilnehmers aus der Konferenz) einbezogen wird, d. h. der Verlauf der Konferenz wird durch die Verfügbarkeit der Konferenzteilnehmer charakterisiert (z. B. durch Hinzuschalten von Teilnehmern zur Konferenz oder Verlassen von Teilnehmern aus der Konferenz).

Zum anderen gibt es Konferenzleistungsmerkmale, die durch den Konferenzführer oder die Konferenzteilnehmer der gesteuerten Konferenzen geprägt sind. Hierbei können z.B. durch einen Konferenzführer mittels geeigneter DSS1-Signalisierung (ETSI ADD-ON Konferenz) oder über zusätzliche graphische Bedienung an einem PC-artigen Endgerät, Konferenzteilnehmer hinzugeschaltet, stummgeschaltet oder von der Konferenz getrennt werden. Diese die Konferenz steuernden Konferenzleistungsmerkmale sind oftmals dem Konferenz Service Operator verfügbar, der die Konferenz-Ressourcen im Netz verwalten und den Konferenzdienst überwachen kann.

Im Hinblick auf Video-Konferenzen, die zunehmend in paketbasierten Netzen Anwendung finden, erhöht sich das Steuerungsbedürfnis der Konferenz durch die beteiligten Konferenzteilnehmer, die in erhöhtem Maße Einfluss auf das zu sehende Bild haben möchten. Hierzu gehört die Auswahl eines oder mehrerer Teilnehmer während der Konferenz, ein sprachaktiviertes Umschalten des Bildes auf den augenblicklich sprechenden Konferenzteilnehmer, die gleichzeitige Bildverfügbarkeit einer gewissen Anzahl von Konferenzteilnehmer sowie das zusätzliches Einblenden von Dokumenten.

In umgekehrter Richtung informieren die existierenden Konferenzlösungen die aktuell in einer Konferenz befindlichen Teilnehmer über den Eintritt eines weiteren Teilnehmers in die Konferenz oder die Tatsache, dass ein Konferenzteilnehmer aus der Konferenz ausgeschieden ist, über Konferenztöne und/oder durch i.a. wenige Konferenzansagen entsprechenden Inhalts.

Im Hinblick auf Initiierung und Steuerung der Konferenzen werden Konferenzdienste wie folgt unterschieden:

Bei der ETSI-ADD-ON Konferenz ist die Bedienung definitionsgemäß nur in einer lokalen Vermittlungsstelle möglich. Sie wird über Teilnehmersignalisierung initiiert und gesteuert (Ziffernfolgebedienung). Sie ist primär in TDM - aber auch in paketbasierten Netzen, deren Vermittlungsstellen klassische Teilnehmersignalisierung unterstützen, realisierbar und kann unmittelbar (AD HOC) initiiert werden.

Die PRESET Konferenz stellt einen Kompromiss aus AD HOC Initiierung bei gleichzeitig vordefinierter Konferenzteilnehmerliste dar.

Als allgemeiner Service im Netz (öffentliche Konferenz) wird die PHONEMEET Konferenz angeboten. Dieser dem Chat im Internet sehr ähnliche, aber viel ältere Dienst stellt einen Service Code zur Verfügung, unter dem man sich themenspezifisch in eine Konferenz einwählen und mit bereits zum Thema eingewählten Konferenzteilnehmern austauschen kann. Die Konferenzteilnehmer kennen sich i.a. nicht und haben auch keine Gewähr dafür, dass sie bei erneutem Einwählen in eine erneute gemeinsame Konferenz verbunden werden. Die charakterisierende Eigenschaft dieses Dienstes ist, dass sich im öffentlichen Netz Teilnehmer unterhalten können, die sich i.a. nicht kennen. Hier ist keine Steuerung durch Konferenzteilnehmer erforderlich, eine automatische Störerüberwachung ist auch nicht verfügbar. Einige Netzbetreiber lassen die Verfügbar keit der Konferenz und den ungestörten Konferenzverlauf durch Operatoren überwachen, die durch sporadisches Mithören unliebsame Störer erkennen und isolieren sollen.

Vorreservierte Konferenzen sind als DIAL-IN, DIAL-OUT oder MIXED DIAL-IN/DIAL-OUT Konferenzen verfügbar. Sie sind insbesondere für Geschäftskunden nutzbar. Nachteilig ist, dass Vorreservierung und Konferenzplanung manuell erfolgen muss, eine AD HOC Verfügbarkeit ist somit nicht gegeben.

Der Vollständigkeit halber seien noch Konferenzdienste mit Web-basierter Bedienoberfläche (wie z. B. Siemens SURPASS WEBCONFER) und TERMINAL Konferenzen, die gemäß einiger Signalisierungsstandards unterstützt werden, angesprochen. Erstere sind über Internetzugriffe buchbar und steuerbar. Der Vorteil einer Web-basierten Bedienung mit Status Display wird durch den Nachteil des Internetzugriffs mit ggf. zusätzlich erforderlichem Endgerät beim Konferenzführer sowie mangelnder Interaktionen mit den Konferenzteilnehmern eingeschränkt. TERMINAL Konferenzen sind z. B. mit den Festlegungen des H.323 Standards (oder auch SIP Standards) mögliche, auf die Funktionen der Endgeräte abgestützte Konferenzen für Audio, Video, Daten, womit klassische Endgeräte nicht verwendbar sind. Hier ist eine zentrale Brücke entbehrlich. Große Konferenzen mit vielen Teilnehmern sind damit jedoch wegen der beschränkten Performanz der Endgeräte nicht möglich. Weiterer Nachteil ist der erhöhte Bandbreitenbedarf zwischen den Konferenzteilnehmern.

Für alle Konferenzdienste sind im Netz Ressourcen bereitzustellen. Da Konferenz-Ressourcen kostenintensives Investment für den Netzbetreiber bedeuten, werden sie nicht in beliebig hoher Anzahl im Netz vorgehalten. Dies bedeutet einen erhöhten Steuerungsaufwand; denn zusätzlich zu den Interaktionen des Konferenzführers und der Teilnehmer während der Konferenz kommt i.a. eine Abstimmung des Konferenztermins, der Verfügbarkeit der Konferenzteilnehmer und entsprechender Konferenz ressourcen sowie der Unterrichtung der Teilnehmer über Zeitpunkt und Zugangberechtigung hinzu, die den Erfolg einer Konferenz sichert.

Die AD HOC initiierbaren Konferenzen haben erfahrungsgemäß eine durch Ziffernfolgebedienung der Telephonie gekennzeichnete oder eine graphische, an ein höherwertiges, intelligentes, eventuell zusätzliches Endgerät gebundene Bedienoberfläche, die der sporadischen sofortigen Bedienbarkeit von beliebigem Endgerät her Grenzen setzen. Die den Konferenzteilnehmern zur Verfügung gestellten Systemtöne und -ansagen erlauben nur globale Rückschlüsse auf den Verlauf und den Status der Konferenz. Im Hinblick auf die vorreservierten Konferenzen sind unter Umständen erhebliche, manuelle Interaktionen vor Konferenzbeginn erforderlich. Derartige Hemmnisse erschweren Einsatz, Umgang und Erfolg von Konferenzlösungen.

Der Erfindung liegt die Aufgabe zugrunde, Konferenzdienste der eingangs genannten Art derart weiterzubilden, dass deren Bedienung und Steuerung erheblich erleichtert wird.

Die Erfindung wird ausgehend von den im Oberbegriff von Patentanspruch 1 angegebenen Merkmalen durch die im kennzeichnenden Teil beanspruchten Merkmale gelöst.

Ein besonderer Vorteil der Erfindung ist darin zu sehen, dass eine Steuerschnittstelle zwischen einer Ansage-/ Dialog-Funktion und einer Konferenzmanagement-Funktion bereitgestellt wird, und zusätzlich eine Spracherkennungsfunktionalität bereitgestellt wird. Damit wird die Vorbereitung und Bedienung/ Steuerung von Konferenzdiensten wesentlich vereinfacht. Beispielsweise können damit die die Konferenz steuernden funktionalen Eingaben über Ziffernfolgen entfallen, da die auf Spracherkennungsfunktionalität basierenden Techniken einen bequemeren Dialog zwischen Mensch und Maschine unterstützen. Korrekturen von Eingaben durch Teilnehmer oder Operator sind damit in einfacher Weise möglich. Grundsätzlich wird damit die Bedienung für alle derzeit bekannten Konferenztypen in TDM und paketbasierten Netzumgebungen vereinfacht, also insbesondere für DIAL-IN, DIAL-OUT, MIXED DIAL-IN/OUT, ETSI ADD-ON, PHONEMEET mit/ ohne Operatorüberwachung, PRESET Konferenz.

Ferner ist die Konferenzfunktionalität insbesondere von AD HOC initiierten Konferenzen von der Teilnehmersignalisierung entkoppelt und auf der Fernebene (d. h. allgemeiner in weiteren Vermittlungssystemen etwa von konkurrierenden Netzbetreibern) verfügbar. Zusatzgeräte mit graphischer Bedienoberfläche sind nicht erforderlich, ebenso wird die Mitwirkung des Operators zur Überwachung, Buchung und/oder Ablauforganisation von Konferenzen minimiert.

Schließlich liegt der große Vorteil der Erfindung in den positiven Auswirkungen auf die Konferenzdienste. So ist die Verfügbarkeit der ETSI ADD-ON Konferenzfunktionalität mit leichter Bedienbarkeit nicht nur in der lokalen Vermittlungsstelle gegeben, sondern in einem beliebigen TDM- oder paketbasierten Netz durch Einsatz von auf (DTMF-) Spracherkennung basierenden Techniken zur Überwindung der Restriktionen der Teilnehmersignalisierung. Vorteilhaft werden auf Spracherkennung beruhende Techniken dann benutzt, wenn insbesondere in paketbasierten Netzen komprimierende Kodierungsverfahren angewendet werden, die die störungsfreie DTMF-Übertragung nicht garantieren. Ferner können alle Buchungs- und Verwaltungsvorgänge für Konferenzdienste durch Einsatz entsprechender IVR-Logik (Interactive Voice Response) ebenso automatisiert werden wie Störererkennung und Abhörinitiierung sowie Steuerung der Folgeaktivitäten durch Spracherkennungsmechanismen. Schließlich ist eine simultane Steuerung von Konferenzfunktionalität durch (DTMF-) Spracheingaben von Konferenzführer und

Konferenzteilnehmern in einer laufenden Konferenz möglich. Damit können IVR-Dialoge für detaillierte Statusausgaben an einzelne oder alle Konferenzteilnehmer in einer laufenden Konferenz weitergegeben werden. Grundsätzlich können mit die sem Konzept kombinierte ADD-ON, Dial-In, Dial-out, Phonemeet, MEET-ME und PRESET Konferenzen realisiert werden.

Vorteilhafte Weiterbildungen der Erfindung sind in den Unteransprüchen vorgesehen.

Die Erfindung wird im folgenden anhand eines figürlich dargestellten Ausführungsbeispiels näher erläutert.

Es zeigen:
- Figur 1: die grundlegenden Verhältnisse im Netz,
- Figur 2: Zusammenspiel der Netzelemente beim Einleiten und Steuern einer aktiven Konferenz.

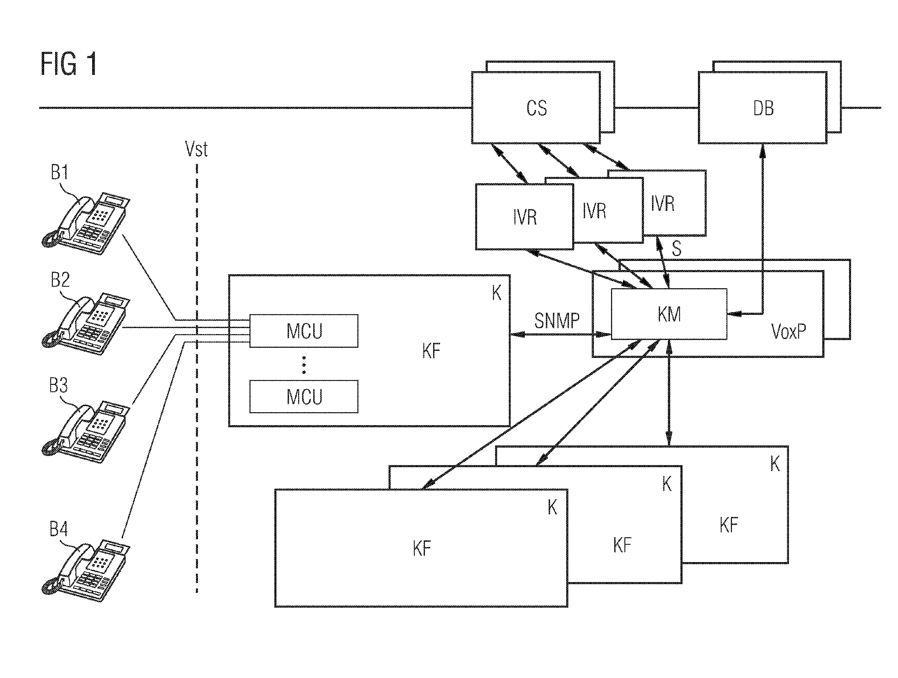

In Fig. 1 sind die grundlegenden Verhältnisse gemäß der Erfindung aufgezeigt. Es wird gemäß vorliegendem Ausführungsbeispiel davon ausgegangen, dass ein öffentliches TDM- oder paketbasiertes, insbesondere IP-basiertes Netz vorliegt, in welchem zur Bereitstellung von komfortablen Konferenzdiensten jeweils mindestens eine Ansage und Dialog-Funktion IVR, eine Konferenzmanagement-Funktion KM und mindestens eine Konferenzfunktion KF vorhanden sind.

Ferner sind Fig. 1 beispielhaft 4 Teilnehmer B1 bis B4 entnehmbar, die einer Konferenz beiwohnen möchten. Diese 4 Konferenzteilnehmer werden von einem Vermittlungssystem Vst bedient und gesteuert. Weiterhin sind in Fig. 1 mehrere voneinander unabhängige Konferenzsysteme K offenbart, in denen die Konferenz-Funktion KF zum Ablauf gelangt. Als Teil eines Konferenzsystems sind Schnittstelleneinrichtungen MCU anzusehen, die als Abschluss der Nutzdatenströme von und zu den Konferenzteilnehmern anzusehen sind.

Die Nutzdaten der Konferenzteilnehmer werden unter Steuerung der Vermittlungsstelle Vst durchgeschaltet und diesen Schnittstelleneinrichtungen MCU zugeführt. Hier wird auch die Mischung der Nutzdatenströme vorgenommen.

Die Konferenzfunktion KF stellt grundsätzlich eine klassische Mischfunktion multipler Eingangssignale für Audio- oder Videosignale dar. Ferner unterstützt sie die Verteilfunktion auch für weitere Informationen. Die hierfür vorzusehende Plattform zeichnet sich durch Telephonie-Schnittstellen zur Anpassung an Netz und Signalisierung ebenso aus wie durch DSP-basierte Mischfunktionen für den Audiostrom und ggf. weitere Funktionen zur Steuerung der Videoausgaben (z. B. Voice Activated Video Switching).

Von der Konferenzfunktion KF werden Konferenzleistungsmerkmale wie DIAL-IN oder DIAL-OUT in Konferenzverbindungen unterstützt, deren beschreibende Daten über eine Steuerschnittstelle zu einer Konferenzmanagement-Funktion KM bereitgestellt werden. Letztere kann jederzeit über diese Schnittstelle in die Konfiguration einer laufenden Konferenz steuernd eingreifen. Als Protokoll zwischen Konferenzmanagement-Funktion KM und den Konferenzsystemen K wird beispielhaft das SNMP Protokoll verwendet.

Es gibt Konferenzteilnehmer, die in der Weise ausgezeichnet sind, dass ihr Eingangsnutzdatenstrom vor dem Zumischen zum Konferenzmischsignal abgegriffen wird und einer Ansage und Dialog-Funktion IVR für gewisse Zeit zum Zwecke des Überwachens auf Störaktivitäten oder zur Erkennung legitimer, die Konferenz steuernder Eingaben (z. B. durch den Konferenzführer) zugespielt wird. Die Eigenschaft der permanenten oder temporären Zuschaltung einer Ansage und Dialog-Funktion IVR kann hierbei über eine Steuerschnittstelle S zwischen Ansage und Dialog-Funktion IVR und Konferenzmanagement-Funktion KM erfolgen.

Die Ansage und Dialog-Funktion IVR gelangt auf mindestens einer separaten Einrichtung oder ggf. auch kollokiert mit der nachstehend noch genauer erläuterten Funktion KM auf einer Einrichtung VoxP zum Ablauf. Sie dient der Dialogführung mit der Eingabeerkennung von dem Konferenzführer oder den Konferenzteilnehmern, wobei DTMF-Eingaben, menügeführte Dialoge oder vorzugsweise Schlüsselworterkennung im natürlichen Dialog (Natural Dialogue, Keyword Spotting) in Frage kommen. Die für die Ansage und Dialog-Funktion IVR benötigte HW-Plattform zeichnet sich i.a. wegen der in öffentlichen Netzen geforderten Performanz durch Telephonie-Schnittstellen aus, die die Anpassung an die Netztechnologie und Signalisierung vornehmen, sowie durch HW und SW, die die Spracherkennungsaufgaben übernehmen (z. B. DSPs, Spracherkennungsalgorithmen).

Die für die Ansage und Dialog-Funktion IVR notwendigen konferenzspezifischen Dialogabläufe sind in geeigneter Weise auf einem Content Server CS hinterlegt, z.B. in Form von VoiceXML Scripts, die aufgrund der Konferenzkonfiguration erstellt werden und die vollständige Dialogabfolge für das IVR System ergeben.

Schließlich ist Fig. 1 eine Konferenzmanagement-Funktion KM entnehmbar, die als reine SW-Funktion ausgebildet ist und die auf einer Einrichtung VoxP zum Ablauf gelangt. Von dieser wird übergreifend ggf. netzweit der Status der Konferenzsysteme K und -deren Ports überwacht und gepflegt. Eine weitere wesentliche Funktionalität liegt in der Reservierung der im voraus gebuchten Konferenzen, in der zeitgerechten Aktivierung und Überwachung/ Steuerung der Konferenzen selbst sowie in der Erzeugung von Gebührentickets insbesondere im Hinblick auf die Reservierung von Ressourcen im Netz. Von der Konferenzmanagement-Funktion KM werden Buchungsdaten und Vergebührungsdaten und ggf. Fehlerindizien sowie Verkehrs- und Statistikdaten auf einem Datenbasis Server DB hinterlegt.

Erfindungsgemäß weist nun die Ansage und Dialog-Funktion IVR eine Steuerschnittstelle S zur Konferenzmanagement-Funktion KM auf, mit der sie in der Lage ist, Buchungsdaten einer Kon ferenz oder die initialen Konferenzparameter einer AD HOC Konferenz an die Konferenzmanagement-Funktion zur weiteren Behandlung auszugeben. In umgekehrter Richtung bezieht die Ansage- und Dialog-Funktion IVR ggf. Informationen über die aktuell bzw. für den beabsichtigten Buchungszeitraum abdeckbaren Ressourcenbedarf von der Konferenzmanagement-Funktion sowie ggf. Gebühreninformationen zur Gestaltung des Dialogs mit dem Konferenzbesteller/ Konferenzführer.

Die Konferenzmanagementfunktion überblickt die Verfügbarkeit von Konferenzressourcen ggf. netzweit und kann damit insbesondere auch Konferenzen unterstützen und reservieren, die aufgrund ihrer Größe oder im Falle von Ressourcenengpässen sich über mehrere Konferenzsysteme erstrecken (Kaskadierung).

Schließlich sind aus Gründen der Ausfallsicherheit Datenbasis Server DB, Content Server CS, Konferenzmanagement-Funktion KM, Ansage- und Dialog Funktion IVR und die Konferenzfunktion KF mindestens gedoppelt ausgeführt. Die genannten Funktionen müssen nicht notwendigerweise auf verschiedenen HW-Plattformen realisiert werden. Insbesondere IVR- Funktion und KM-Funktion können auf unterschiedlichen HW-Plattformen realisiert sein.

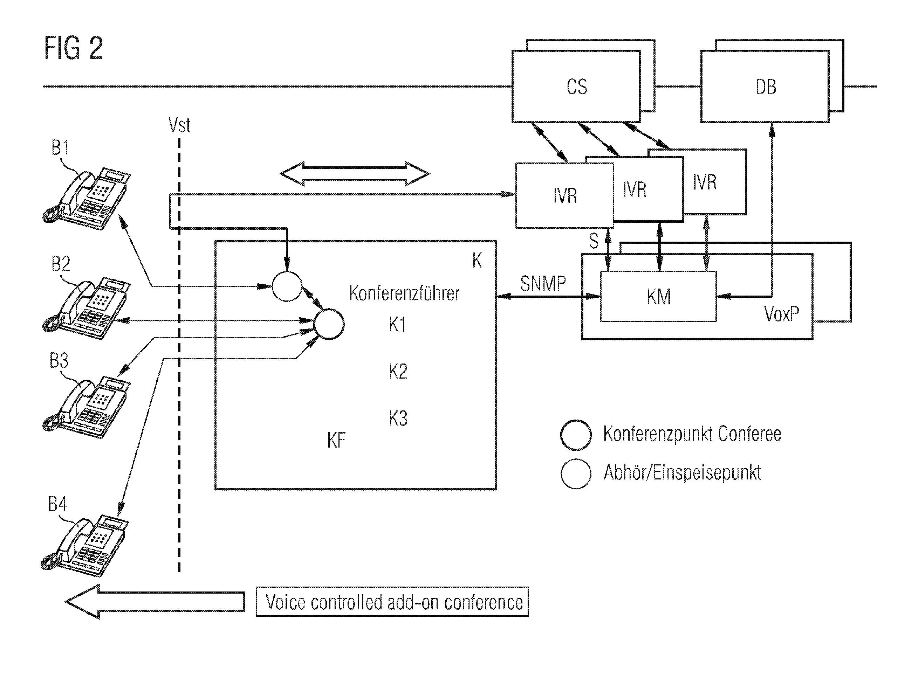

In Fig. 2 ist als Anwendung des erfindungsgemäßen Verfahrens aufgezeigt, wie das Zusammenspiel der Netzelemente bei aktiver Konferenz erfolgt.

Hierbei soll beispielhaft von einer ETSI ADD-ON Konferenz ausgegangen werden. Dies ist eine spontan aktivierbare große Konferenz. Mit Hilfe des erfindungsgemäßen Verfahrens lassen sich die Konferenzleistungsmerkmale der ETSI ADD-ON Konferenz losgelöst von einer lokalen Vermittlungsstelle und mit wesentlich mehr Komfort anbieten. Voraussetzung ist, dass der Konferenzführer den Dienst explizit subskribiert hat oder implizit über sein Telephonieprofil Dienstberechtigung besitzt.

Eine wenn auch unerhebliche funktionale Einschränkung ist die ohne weitere Anforderung nicht gegebene Aufbaubarkeit der Konferenz aus einer beliebigen bestehenden Zweierverbindung. D.h., der Konferenzführer hat mit Initiierung der Verbindung die Absicht, eine Konferenz einzuberufen.

Ist diese Voraussetzung gegeben, ruft der Konferenzführer eine Service-Rufnummer des Netzbetreibers an, worauf er mit einer Ansage-/ Dialog-Funktion IVR verbunden wird, die seine Service-Berechtigung überprüft und die initial bekannten Daten der Konferenz vorzugsweise im natürlichen Dialog ermittelt. Die Ansage-/ Dialog-Funktion IVR überprüft die initial angeforderten Daten auf der Grundlage der verfügbaren Konferenzressourcen durch Zugriff auf die Konferenzmanagement-Funktion KM. Sind die geforderten Ressourcen verfügbar, erfolgt ggf. nach Ausgabe eines Gebührenhinweises und Erhalt der Zustimmung zur Konferenzaktivierung der Start der initialen Konferenz. Dies geschieht durch Übergabe der Konferenzparameter an die Konferenzmanagement-Funktion. Die Verfügbarkeit der Ressourcen werden hierbei ggf. schon im Laufe des Dialogs mit Hilfe der Konferenzmanagementfunktion KM überprüft , und es kann sinnvollerweise eine vorläufige Buchung der Konferenzressourcen durch die Konferenzmanagementfunktion durchgeführt werden. Die zur Definition der initialen Konferenz erforderliche Verbindung mit der Ansage und Dialog-Funktion IVR wird nach Abspielen einer entsprechenden Hinweisansage ausgelöst.

Durch die Übergabe der Konferenzparameter an die Konferenzmanagement-Funktion erfolgt der Start der initialen Konferenz über Dial-out aus mindestens einem der Konferenzsysteme. Hierbei ist der Konferenzführer ein ausgezeichneter erster Konferenzteilnehmer, der eine entsprechende Hinweisansage bekommt, bis der nächste Konferenzteilnehmer einbezogen wurde. Der Eintritt der weiteren Konferenzteilnehmer erfolgt jeweils mit entsprechenden Hinweistönen oder Ansagen. Die initialen Konferenzparameter können auch DIAL-IN berechtigte Teilneh meradressen enthalten und so eine Mischform zwischen ADD-ON und MEET-ME Konferenz ermöglichen.

Zur weiteren Steuerung der Konferenz ist der als erster Konferenzteilnehmer ausgezeichnete Konferenzführer mit seinem Eingabenutzdatenstrom von Beginn der Konferenz an zugleich mit einer speziellen Ansage und Dialog-Funktion IVR verbunden. Diese lauscht am Eingangsstrom des Konferenzführers auf spezielle Schlüsselworte (wie z. B. ,Konferenzoperator') oder eine gewisse DTMF-Eingabe. Wird eines davon detektiert, so veranlasst die Ansage und Dialog-Funktion IVR den Start eines Dialogs mit dem Konferenzführer zur Ermittlung von während der Konferenz aufgetretenen neuen Wünschen des Konferenzführers. Derartige Wünsche könnten z. B. das Zuschalten eines weiteren Konferenzteilnehmers, Isolation oder Auslösen eines Konferenzteilnehmers, Wünsche für Bildgestaltung/ Modus von Videokonferenzen, Dateneinspielung, Gesprächskreise bilden, Wechseln des Konferenzführers zwischen Gesprächskreisen seiner Konferenz usw. sein.

Im einfachsten Fall kann der Dialog des Konferenzführers den anderen Konferenzteilnehmern hörbar sein, was den Vorteil hat, dass diese über den Fortgang der Konferenz stets informiert sind. Soll das nicht sein, bewirkt die Ansage und Dialog-Funktion IVR über die Steuerschnittstelle der Konferenzfunktion KF das Abtrennen des Konferenzführers von seiner Konferenz für die Dauer des IVR-Dialogs zur Konferenzsteuerung. Hierbei kann den abgetrennten Konferenzteilnehmern eine entsprechende Hinweisansage eingespielt werden.

Die Konferenz endet mit dem Auflegen des Konferenzführers oder auch mit IVR-Dialog zur Beendigung der Konferenz ggf. unter Ausgabe der aufgelaufenen Gebühren, die über die Konferenzmanagement-Funktion konferenzabschnittsweise in der Datenbasis hinterlegt werden können.

Weiterbildungen des erfindungsgemäßen Verfahrens in diesem Ausführungsbeispiel sind Weitergabe der Konferenzführerschaft an einen der Konferenzteilnehmer oder Steuerung der Konferenzfunktion (z. B. des Videosignals an einen Konferenzteilnehmer) durch die Konferenzteilnehmers selbst in Analogie zur Gesamtsteuerung der Konferenz durch den Konferenzführer, also insbesondere mittels lauschender Ansage und Dialog-Funktion IVR und vorzugsweise im natürlichen Dialog.

Eine weitere Ausprägung des erfindungsgemäßen Verfahrens in diesem Ausführungsbeispiel ist die automatische Weiterleitung (CALL TRANSFER) der ersten Verbindung des Konferenzinitiators von der Ansage-/ Dialog-Funktion IVR zum Abhör/- Einspeisepunkt des Konferenzführers der Konferenzfunktion KF unter Steuerung der Konferenzmanagementfunktion KM. Dies ermöglicht dem Konferenzführer eine bequemere Herstellung der AD HOC Konferenz im Vergleich zur oben beschriebenen DIAL OUT Prozedur, bei der die den Konferenzservice initierende Verbindung beendet wird.

## Patentansprüche

1. Verfahren zum Steuern von Konferenzen,
mit mindestens einer Ansage-/Dialog-Funktion (IVR), und mindestens einer Konferenzfunktion (KF),
**dadurch gekennzeichnet,**
**dass** die Konferenz im Dialog eines Konferenzführers mit einer Ansage-/ Dialog-Funktion (IVR) unter der Steuerung einer Konferenzmanagement-Funktion (KM) gestartet wird,
**dass** zur Steuerung der Konferenz von der Ansage-/Dialog-Funktion (IVR) der Nutzdatenstrom des Konferenzführers auf Schlüsselworte oder Töne hin überwacht wird, und
**dass** jeweils bei Ermitteln eines Schlüsselwortes ein Dialog zwischen Konferenzführer und Ansage-/ Dialog-Funktion (IVR) gestartet wird, über den der Ablauf der Konferenz beeinflusst wird.

2. Verfahren nach Anspruch 1,
**dadurch gekennzeichnet,**
**dass** die Konferenz gestartet wird, indem von einem Konferenzführer eine Service-Rufnummer angewählt wird, mittels der eine Verbindung zwischen Konferenzführer und einer Ansage-/ Dialog-Funktion (IVR) aufgebaut wird, über die ein Dialog zum Austausch von Kenndaten erfolgt, und
**dass** die Konferenz nach Maßgabe von Service-Berechtigung des Konferenzführers und verfügbaren Konferenzressourcen eingeleitet wird, und der Eintritt weiterer Konferenzteilnehmer unter Steuerung der Konferenzmanagement-Funktion (KM) und im Dialog der Ansage-/ Dialog-Funktion (IVR) mit dem Konferenzführer durchgeführt wird.

3. Verfahren nach Anspruch 1, 2,
**dadurch gekennzeichnet,**
**dass** der Dialog zwischen Ansage-/ Dialog-Funktion (IVR) und dem Konferenzführer DTMF-gesteuert ist.

4. Verfahren nach Anspruch 1 bis 2,
**dadurch gekennzeichnet,**
**dass** der Dialog zwischen Ansage-/ Dialog-Funktion (IVR) und dem Konferenzführer über eine schlüsselwortgesteuerte (Keyword Spotting) Spracherkennungsfunktion erfolgt.

5. Verfahren nach Anspruch 1 bis 4,
**dadurch gekennzeichnet,**
**dass** die von der Ansage-/ Dialog-Funktion (IVR) überwachten Schlüsselworte sprachlicher Natur und/oder als DTMF-Eingabe ausgebildet sind.

6. Verfahren nach einem der vorstehenden Ansprüche,
**dadurch gekennzeichnet,**
**dass** durch Ermitteln eines Schlüsselwortes im Dialog zwischen Konferenzführer und Ansage-/ Dialog-Funktion (IVR) wahlweise weitere Konferenzleistungsmerkmale wie das Zuschalten eines weiteren Konferenzteilnehmers, Isolation oder Auslösen eines Konferenzteilnehmers, Einflussnahme auf Bildgestaltung/ Modus von Videokonferenzen, Dateneinspielung, Bildung von Gesprächskreisen, Wechseln des Konferenzführers zwischen Gesprächskreisen seiner Konferenz usw. eingeleitet werden.

7. Verfahren nach einem der vorstehenden Ansprüche,
**dadurch gekennzeichnet,**
**dass** der Dialog des Konferenzführeres mit der Ansage-/ Dialog-Funktion (IVR) den anderen Konferenzteilnehmern wahlweise unterdrückt wird durch Abtrennen des Konferenzführers von seiner Konferenz über die Steuerschnittstelle der Konferenzfunktion (KF) für die Dauer des Dialogs.

8. Verfahren nach einem der vorstehenden Ansprüche,
**dadurch gekennzeichnet,**
**dass** die Konferenz mit dem Auflegen des Konferenzführers oder über einen Dialog des Konferenzführers mit der Ansage-/ Dialog-Funktion (IVR) beendet wird, wobei wahlweise die aufgelaufenen Gebühren ausgegeben und/ oder über die Konferenzma nagement-Funktion (KM) konferenzabschnittsweise in der Datenbasis (DB) hinterlegt werden.

9. Verfahren nach einem der vorstehenden Ansprüche,
**dadurch gekennzeichnet,**
**dass** die Weitergabe der Konferenzführerschaft an einen der Konferenzteilnehmer oder Steuerung der Konferenzfunktion (KF) durch die Konferenzteilnehmer mittels Dialog mit der Ansage-/Dialog-Funktion (IVR) möglich ist.

10. Verfahren nach einem der vorstehenden Ansprüche,
**dadurch gekennzeichnet,**
**dass** die Details der Dialogführung mit Konferenzführer und Konferenzteilnehmer in Form von VoiceXML Scripts auf mindestens einem den Dialog-Funktionen (IVR) zugreifbaren Content Server (CS) hinterlegt sind.

11. Verfahren nach einem der voranstehenden Ansprüche,
**dadurch gekennzeichnet,**
**dass** die Konferenzmanagement-Funktion (KM) die Verfügbarkeit von Konferenzfunktion (KF) und Ansage- und Dialog-Funktion (IVR) übergreifend kennt und den Ablauf der Dialoge mit Konferenzführer und Konferenzteilnehmern entsprechend über die Steuerschnittstelle S beeinflusst.

12. Verfahren nach einem der voranstehenden Ansprüche,
**dadurch gekennzeichnet,**
**dass** die Konferenzmanagement-Funktion (KM), die Erkennerfunktion (IVR) sowie die Konferenzfunktion (KF) jeweils mindestens gedoppelt auf mindestens zwei unterschiedlichen HW-Plattformen realisiert sind.

13. Verfahren nach einem der voranstehenden Ansprüche,
**dadurch gekennzeichnet,**
**dass** die Konferenzmanagement-Funktion (KM) jederzeit in die Steuerung einer Konferenz eingreifen kann und die Ansage- und Dialog-Funktion (IVR) zur Information und Abfrage der Konferenzteilnehmer aktivieren kann.

14. Verfahren nach einem der voranstehenden Ansprüche,
**dadurch gekennzeichnet,**
**dass** zum Eintritt in den Konferenzzustand eine automatische Weiterleitung (CALL TRANSFER) der Verbindung des Konferenzinitiators von der Ansage-/ Dialog-Funktion IVR zu einer Konferenzfunktion (KF) erfolgt.

15. Vorrichtung zum Steuern von Konferenzen,
mit mindestens einer Dialog-Funktion (IVR) und mindestens einer Konferenzfunktion (KF), die auf wenigstens einem Konferenzsystem (K) zum Ablauf gelangt,
**dadurch gekennzeichnet,**
**dass** eine Steuerschnittstelle (S) zwischen Ansage-/ Dialog-Funktion (IVR) und einer Konferenzmanagement-Funktion (KM) vorgesehen ist, über die Konferenzmanagement-Funktion (KM) wenigstens eine Konferenz initiiert und ihren weiteren Verlauf nach Maßgabe der im Nutzdatenstrom eintreffenden Sprachund/oder Tonsignale eines oder mehrerer Konferenzteilnehmer und im Zusammenwirken mit mindestens einer Ansage/ Dialogfunktion (IVR) steuert.
